# EUROPEAN PATENT APPLICATION

(11) **EP 4 451 088 A1**
(43) Date of publication of application: **23.10.2024**
(21) Application number: 23812837.5
(22) Date of filing: 23.11.2023
(51) Int. Cl.: G06F 1/16, H04R 1/28

(54) **ELECTRONIC DEVICE COMPRISING STRUCTURE FOR EXPANDING RESONANCE STRUCTURE OF SPEAKER**

(30) Priority: 08.03.2023 KR 20230030429; 28.03.2023 KR 20230040664
(71) Applicant: Samsung Electronics Co., Ltd., Suwon-si, Gyeonggi-do 16677 (KR)
(72) Inventor: LEE, Myungcheol, Suwon-si, Gyeonggi-do 16677 (KR); CHO, Joonrae, Suwon-si, Gyeonggi-do 16677 (KR); KIM, Kiwon, Suwon-si, Gyeonggi-do 16677 (KR); SIM, Myoungsung, Suwon-si, Gyeonggi-do 16677 (KR); LEE, Byounghee, Suwon-si, Gyeonggi-do 16677 (KR); CHO, Woojin, Suwon-si, Gyeonggi-do 16677 (KR)
(74) Representative: Appleyard Lees IP LLP
(86) International application number: PCT/KR2023/019036
(87) International publication number: WO 2024/185957

(57) **Abstract**

An electronic device according to an embodiment includes a housing including a speaker hole, a first surface configured to output audio, a speaker including a second surface opposite to the first surface, an audio path extending from the first surface toward the speaker hole, a resonance space separated from the audio path, a first adsorption sheet disposed in the resonance space, a second adsorption sheet disposed on the first adsorption sheet and having a size different from a size of the first adsorption sheet, and an air gap interposed between the first adsorption sheet and the second adsorption sheet.

## Description

### [Technical Field]

The following descriptions relate to an electronic device including a structure for increasing a resonance space of a speaker.

### [Background Art]

The electronic device may include various electronic components. For example, the electronic device may include a speaker configured to emit audio for providing auditory information to a user. The electronic device may include an audio path that guides audio output from the speaker to move outside the electronic device. The audio output from the speaker may be transmitted from the speaker in the electronic device to the outside of the electronic device by moving along the audio path.

### [Disclosure]

### [Technical Solution]

An electronic device is provided. The electronic device may comprise a housing including a speaker hole. The electronic device may comprise a speaker including a first surface configured to output audio and a second surface opposite to the first surface, and disposed within the housing. The electronic device may comprise an audio path extending from the first surface toward the speaker hole to output the audio to outside of the housing. The electronic device may comprise a resonance space separated from the audio path. The electronic device may comprise a first adsorption sheet disposed within the resonance space to adsorb at least a portion of the air in the resonance space. The electronic device may comprise a second adsorption sheet disposed on the first adsorption sheet in the resonance space to adsorb at least a portion of the air in the resonance space, and having a size different from a size of the first adsorption sheet. The electronic device may comprise an air gap interposed between the first adsorption sheet and the second adsorption sheet.

An electronic device is provided. The electronic device may comprise a housing including a speaker hole and forming an exterior of the electronic device. The electronic device may comprise a speaker module disposed within the housing. The speaker module may include a speaker including a first surface configured to output audio and a second surface opposite to the first surface. The speaker module may include a first enclosure surrounding a portion of the speaker. The speaker module may include a second enclosure coupled to the first enclosure and surrounding another portion of the speaker. The speaker module may include an audio path extending from the first surface toward outside of the speaker module to output the audio to outside of the housing. The speaker module may include a resonance space separated from the audio path, and at least partially located on the second surface. The speaker module may include a plurality of adsorption sheets disposed within the resonance space to adsorb at least a portion of the air in the resonance space, and laminated on each other. The speaker module may include an air gap located between each of the plurality of adsorption sheets. A width of a first adsorption sheet among the plurality of adsorption sheets may be different from a width of a second adsorption sheet among the plurality of adsorption sheets.

### [Description of the Drawings]

FIG. 1 is a block diagram illustrating an electronic device 101 in a network environment 100 according to various embodiments.
FIG. 2 is a diagram illustrating an exemplary electronic device.
FIG. 3 is an exploded perspective view of an exemplary electronic device.
FIG. 4 is a cross-sectional view illustrating an example in which an exemplary electronic device is cut along line A-A' of FIG. 2.
FIG. 5A is a perspective view illustrating a plurality of exemplary adsorption sheets.
FIG. 5B is an exploded perspective view illustrating a plurality of exemplary adsorption sheets.
FIG. 6A is a perspective view illustrating a plurality of exemplary adsorption sheets.
FIG. 6B is an exploded perspective view illustrating a plurality of exemplary adsorption sheets.
FIG. 7A is a perspective view illustrating a plurality of exemplary adsorption sheets.
FIG. 7B is an exploded perspective view illustrating a plurality of exemplary adsorption sheets.
FIG. 8A is an exploded perspective view illustrating a plurality of exemplary adsorption sheets.
FIG. 8B is a cross-sectional view illustrating an example in which a plurality of exemplary adsorption sheets are cut along line B-B' of FIG. 8A.
FIG. 9A is a perspective view illustrating a plurality of exemplary adsorption sheets.
FIG. 9B is an exploded perspective view illustrating a plurality of exemplary adsorption sheets.
FIG. 10A is a perspective view illustrating a plurality of exemplary adsorption sheets.
FIG. 10B is an exploded perspective view illustrating a plurality of exemplary adsorption sheets.
FIG. 11 is a perspective view illustrating a plurality of exemplary adsorption sheets.

### [Mode for Invention]

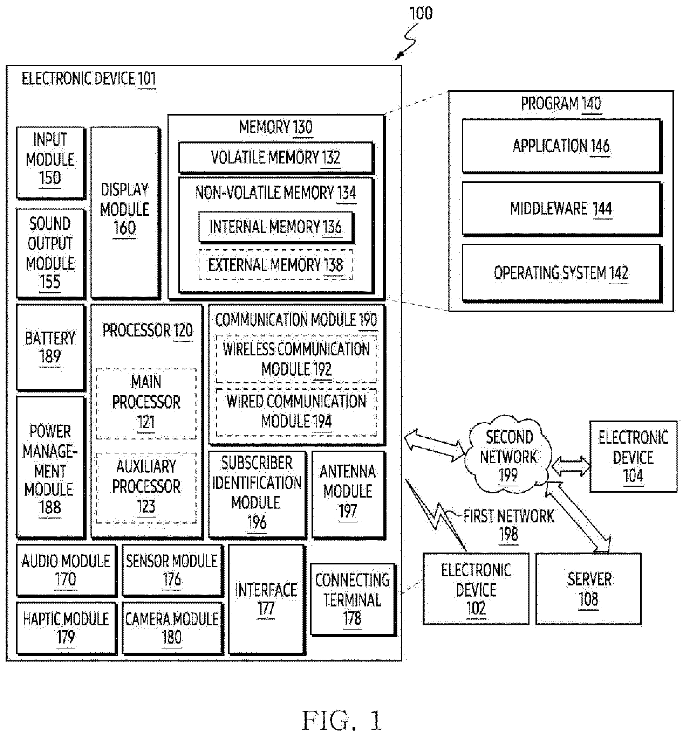

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, and/or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

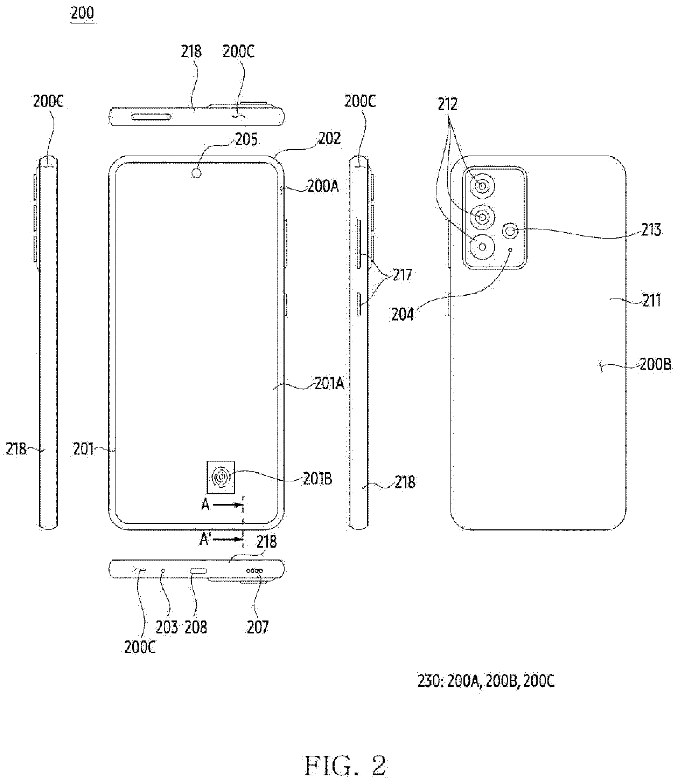

FIG. 2 is a diagram illustrating an electronic device according to an embodiment.

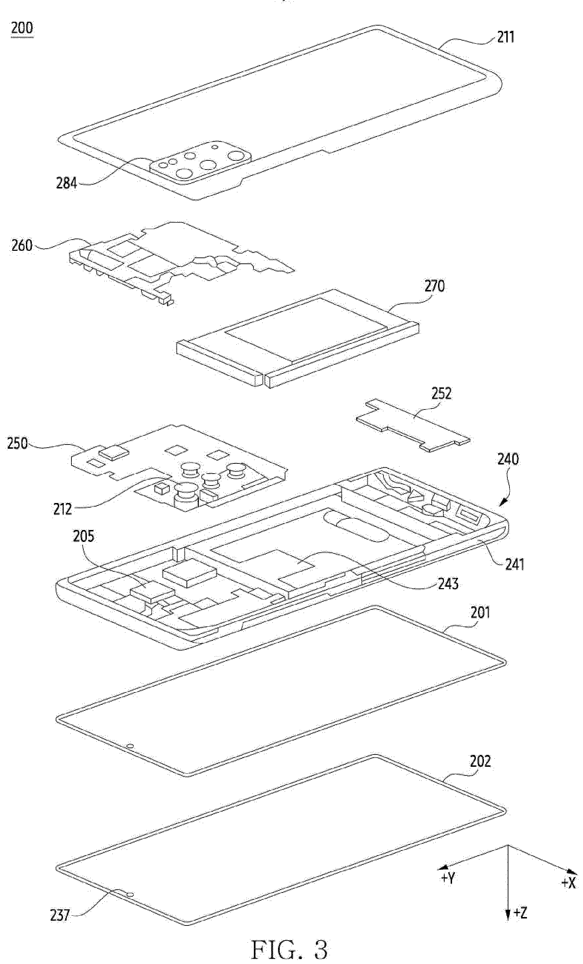

Referring to FIG. 2, an electronic device 200 (e.g., an electronic device 101 of FIG. 1) according to an embodiment may include a housing 230 forming an exterior of the electronic device 200. For example, the housing 230 may include a first surface (or a front surface) 200A, a second surface (or a rear surface) 200B, and a third surface (or a side surface) 200C surrounding a space between the first surface 200A and the second surface 200B. In an embodiment, the housing 230 may refer to a structure (e.g., a frame structure 240 of FIG. 3) forming at least a portion of the first surface 200A, the second surface 200B, and/or the third surface 200C.

The electronic device 200 according to an embodiment may include a substantially transparent front plate 202. In an embodiment, the front plate 202 may form at least a portion of the first surface 200A. In an embodiment, the front plate 202 may include, for example, a glass plate including various coating layers or a polymer plate, but is not limited thereto.

The electronic device 200 according to an embodiment may include a substantially opaque rear plate 211. In an embodiment, the rear plate 211 may form at least a portion of the second surface 200B. In an embodiment, the rear plate 211 may be formed of coated or colored glass, ceramic, polymer, metal (e.g., aluminum, stainless steel (STS), or magnesium), or a combination of at least two of the above materials.

The electronic device 200 according to an embodiment may include a side bezel structure (or side member) 218 (e.g., a side wall 241 of a frame structure 240 of FIG. 3). In an embodiment, the side bezel structure 218 may be coupled to the front plate 202 and/or the rear plate 211 to form at least a portion of the third surface 200C. For example, the side bezel structure 218 may form all of the third surface 200C, and for another example, the side bezel structure 218 may form the third surface 200C together with the front plate 202 and/or the rear plate 211.

Unlike the illustrated embodiment, when the third surface 200C is partially formed by the front plate 202 and/or the rear plate 211, the front plate 202 and/or the rear plate 211 may include a region that is bent from a periphery thereof toward the rear plate 211 and/or the front plate 202 and seamlessly extends. The extended region of the front plate 202 and/or the rear plate 211 may be positioned at both ends of, for example, a long edge of the electronic device 200, but is not limited to the above-described examples.

In an embodiment, the side bezel structure 218 may include a metal and/or a polymer. In an embodiment, the rear plate 211 and the side bezel structure 218 may be integrally formed and may include the same material (e.g., a metal material such as aluminum), but are not limited thereto. For example, the rear plate 211 and the side bezel structure 218 may be formed in separate configurations and/or may include different materials.

In an embodiment, the electronic device 200 may include at least one of a display 201, an audio module 203, 204, 207, a sensor module (not illustrated), a camera module 205, 212, 213, a key input device 217, a light emitting device (not illustrated), and/or a connector hole 208. In an embodiment, the electronic device 200 may omit at least one of the components (e.g., a key input device 217 or a light emitting device (not illustrated)), or may further include another component.

In an embodiment, the display 201 (e.g., a display module 160 of FIG. 1) may be visually exposed through a substantial portion of the front plate 202. For example, at least a portion of the display 201 may be visible through the front plate 202 forming the first surface 200A. In an embodiment, the display 201 may be disposed on the rear surface of the front plate 202.

In an embodiment, the outside shape of the display 201 may be formed substantially the same as the outside shape of the front plate 202 adjacent to the display 201. In an embodiment, in order to expand the area in which the display 201 is visually exposed, the distance between the outside of the display 201 and the outside of the front plate 202 may be formed to be generally the same.

In an embodiment, the display 201 (or the first surface 200A of the electronic device 200) may include a screen display area 201A. In an embodiment, the display 201 may provide visual information to a user through the screen display area 201A. In the illustrated embodiment, when the first surface 200A is viewed from the front, it is illustrated that the screen display area 201A is spaced apart from the outside of the first surface 200A and is positioned inside the first surface 200A, but it is not limited thereto. In an embodiment, when the first surface 200A is viewed from the front, at least a portion of the periphery of the screen display area 201A may substantially coincide with the periphery of the first surface 200A (or the front plate 202).

In an embodiment, the screen display area 201A may include a sensing area 201B configured to obtain biometric information of a user. Here, the meaning of "the screen display area 201A includes the sensing area 201B" may be understood to mean that at least a portion of the sensing area 201B may be overlapped on the screen display area 201A. For example, the sensing area 201B, like other areas of the screen display area 201A, may refer to an area in which visual information may be displayed by the display 201 and additionally biometric information (e.g., fingerprint) of a user may be obtained. In an embodiment, the sensing area 201B may be formed in the key input device 217.

In an embodiment, the display 201 may include an area in which the first camera module 205 (e.g., a camera module 180 of FIG. 1) is positioned. In an embodiment, an opening may be formed in the area of the display 201, and the first camera module 205 (e.g., a punch hole camera) may be at least partially disposed in the opening to face the first surface 200A. For example, the screen display area 201A may surround at least a portion of the periphery of the opening. In an embodiment, the first camera module 205 (e.g., an under display camera (UDC)) may be disposed under the display 201 to overlap the area of the display 201. For example, the display 201 may provide visual information to the user through the area, and additionally, the first camera module 205 may obtain an image corresponding to a direction facing the first surface 200A through the area of the display 201.

In an embodiment, the display 201 may be coupled to or disposed adjacent to a touch sensing circuit, a pressure sensor capable of measuring the intensity (pressure) of the touch, and/or a digitizer that detects a magnetic field type stylus pen.

In an embodiment, the audio modules 203, 204 and 207 (e.g., an audio module 170 of FIG. 1) may include microphone holes 203 and 204 and a speaker hole 207.

In an embodiment, the microphone holes 203 and 204 may include a first microphone hole 203 formed in a partial area of the third surface 200C and a second microphone hole 204 formed in a partial area of the second surface 200B. A microphone (not illustrated) for obtaining an external sound may be disposed inside the microphone holes 203 and 204. The microphone may include a plurality of microphones to detect the direction of sound.

In an embodiment, the second microphone hole 204 formed in a partial area of the second surface 200B may be disposed adjacent to the camera modules 205, 212 and 213. For example, the second microphone hole 204 may obtain sound according to operations of the camera modules 205, 212, and 213. However, it is not limited thereto.

In an embodiment, the speaker hole 207 may include an external speaker hole 207 and a receiver hole (not illustrated) for a call. The external speaker hole 207 may be formed on a portion of the third surface 200C. In an embodiment, the external speaker hole 207 may be implemented as one hole with the microphone hole 203. Although not illustrated, a receiver hole (not illustrated) for a call may be formed on another portion of the third surface 200C. For example, the receiver hole for a call may be formed on the opposite side of the external speaker hole 207 on the third surface 200C. For example, based on the illustration of FIG. 2, the external speaker hole 207 may be formed on the third surface 200C corresponding to the lower end of the electronic device 200, and the receiver hole for a call may be formed on the third surface 200C corresponding to the upper end of the electronic device 200. However, the present invention is not limited thereto, and in an embodiment, the receiver hole for a call may be formed at a position other than the third surface 200C. For example, the receiver hole for a call may be formed by a space spaced apart between the front plate 202 (or display 201) and the side bezel structure 218.

In an embodiment, the electronic device 200 may include at least one speaker (not illustrated) configured to output sound to the outside of the housing 230 through an external speaker hole 207 and/or a receiver hole (not illustrated) for a call.

In an embodiment, the sensor module (not illustrated) (e.g., a sensor module 176 of FIG. 1) may generate an electrical signal or data value corresponding to an internal operating state or an external environmental state of the electronic device 200. For example, the sensor module may include at least one of a proximity sensor, an HRM sensor, a fingerprint sensor, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, and an illumination sensor.

In an embodiment, the camera modules 205, 212 and 213 (e.g., a camera module 180 of FIG. 1) may include a first camera module 205 disposed to face the first surface 200A of the electronic device 200, a second camera module 212 disposed to face the second surface 200B, and a flash 213.

In an embodiment, the second camera module 212 may include a plurality of cameras (e.g., a dual camera, a triple camera, or a quad camera). However, the second camera module 212 is not necessarily limited to including a plurality of cameras, and may include one camera.

In an embodiment, the first camera module 205 and the second camera module 212 may include one or a plurality of lenses, an image sensor, and/or an image signal processor.

In an embodiment, the flash 213 may include, for example, a light emitting diode or a xenon lamp. In an embodiment, two or more lenses (infrared camera, wide-angle and telephoto lens) and image sensors may be disposed on one side of electronic device 200.

In an embodiment, the key input device 217 (e.g., an input module 150 of FIG. 1) may be disposed on the third surface 200C. In an embodiment, the electronic device 200 may not include some or all of the key input devices 217, and the not included key input device 217 may be implemented on the display 201 in another form such as a soft key.

In an embodiment, the connector hole 208 may be formed on the third surface 200C to accommodate the connector of the external device. A connection terminal (e.g., a connection terminal 178 of FIG. 1) electrically connected to the connector of the external device may be disposed in the connector hole 208. The electronic device 200 according to an embodiment may include an interface module (e.g., an interface 177 of FIG. 1) for processing electrical signals transmitted and received through the connection terminal.

In an embodiment, the electronic device 200 may include a light emitting device (not illustrated). For example, the light emitting device (not illustrated) may be disposed on the first surface 200A of the housing 230. The light emitting device (not illustrated) may provide state information of the electronic device 200 in a form of light. In an embodiment, the light emitting device (not illustrated) may provide a light source interlock with an operation of the first camera module 205. For example, the light emitting device (not illustrated) may include an LED, an IR LED, and/or a xenon lamp.

FIG. 3 is an exploded perspective view of an exemplary electronic device according to an embodiment.

Hereinafter, overlapping descriptions of components having the same reference numerals as those of the above-described components will be omitted.

Referring to FIG. 3, the electronic device 200 (e.g., an electronic device 101 of FIG. 1) according to an embodiment may include a display 201, a front plate 202, a rear plate 211, a frame structure 240, a first printed circuit board 250, a second printed circuit board 252, a cover plate 260, and a battery 270.

In an embodiment, the frame structure 240 may include a sidewall 241 forming an exterior (e.g., the third surface 200B of FIG. 2) of the electronic device 200 and a support portion 243 extending inward from the sidewall 241. In an embodiment, the frame structure 240 may be disposed between the display 201 and the rear plate 211. In an embodiment, the sidewall 241 of the frame structure 240 may surround a space between the rear plate 211 and the front plate 202 (and/or the display 201), and the support portion 243 of the frame structure 240 may extend from the sidewall 241 within the space.

In an embodiment, the frame structure 240 may support or accommodate other components included in the electronic device 200. For example, the display 201 may be disposed on one surface of the frame structure 240 facing one direction (e.g., the +z direction), and the display 201 may be supported by the support portion 243 of the frame structure 240. For another example, a first printed circuit board 250, a second printed circuit board 252, a battery 270, and a second camera module 212 may be disposed on the other surface facing a direction opposite to the one direction (e.g., the -z direction) of the frame structure 240. The first printed circuit board 250, the second printed circuit board 252, the battery 270, and the second camera module 212 may be mounted on a recess defined by the sidewall 241 and/or the support portion 243 of the frame structure 240.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed in the frame structure 240 through a coupling member such as a screw. For example, the battery 270 may be fixedly disposed on the frame structure 240 through an adhesive member (e.g., a double-sided tape). However, it is not limited by the above-described example.

In an embodiment, a cover plate 260 may be disposed between the first printed circuit board 250 and the rear plate 211. In an embodiment, the cover plate 260 may be disposed on the first printed circuit board 250. For example, the cover plate 260 may be disposed on a surface facing the -z direction of the first printed circuit board 250.

In an embodiment, the cover plate 260 may at least partially overlap the first printed circuit board 250 with respect to the z-axis. In an embodiment, the cover plate 260 may cover at least a partial area of the first printed circuit board 250. Through this, the cover plate 260 may protect the first printed circuit board 250 from physical impact or prevent the connector coupled to the first printed circuit board 250 from being separated.

In an embodiment, the cover plate 260 may be fixedly disposed on the first printed circuit board 250 through a coupling member (e.g., a screw), or may be coupled to the frame structure 240 together with the first printed circuit board 250 through the coupling member.

In an embodiment, the display 201 may be disposed between the frame structure 240 and the front plate 202. For example, a front plate 202 may be disposed on one side (e.g., a +z direction) of the display 201 and a frame structure 240 may be disposed on the other side (e.g., a -z direction).

In an embodiment, the front plate 202 may be coupled to the display 201. For example, the front plate 202 and the display 201 may adhere to each other through an optical adhesive member (e.g., optically clear adhesive (OCA) or optically clear resin (OCR)) interposed therebetween.

In an embodiment, the front plate 202 may be coupled to the frame structure 240. For example, the front plate 202 may include an outside portion extending outside the display 201 when viewed in the z-axis direction, and may adhere to the frame structure 240 through an adhesive member (e.g., a double-sided tape) disposed between the outside portion of the front plate 202 and the frame structure 240 (e.g., the sidewall 241). However, it is not limited by the above-described example.

In an embodiment, the first printed circuit board 250 and/or the second printed circuit board 252 may be equipped with a processor (e.g., a processor 120 of FIG. 1), a memory (e.g., a memory 130 of FIG. 1), and/or an interface (e.g., an interface 177 of FIG. 1). The processor may include, for example, one or more of a central processing unit, an application processor, a graphic processing unit, an image signal processor, a sensor hub processor, or a communication processor. The memory may include, for example, a volatile memory or a nonvolatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. In an embodiment, the first printed circuit board 250 and the second printed circuit board 252 may be operatively or electrically connected to each other through a connection member (e.g., a flexible printed circuit board).

In an embodiment, the battery 270 may supply power to at least one component of the electronic device 200. For example, the battery 270 may include a rechargeable secondary cell or a fuel cell. At least a portion of the battery 270 may be disposed on substantially the same plane as the first printed circuit board 250 and/or the second printed circuit board 252.

The electronic device 200 according to an embodiment may include an antenna module (not illustrated) (e.g., an antenna module 197 of FIG. 1). In an embodiment, the antenna module may be disposed between the rear plate 211 and the battery 270. The antenna module may include, for example, a near field communication (NFC) antenna, a wireless charging antenna, and/or a magnetic secure transmission (MST) antenna. The antenna module, for example, may perform short-range communication with an external device, or wirelessly transmit and receive power to and from the external device.

In an embodiment, the first camera module 205 (e.g., a front camera) may be disposed in at least a portion (e.g., a support portion 243) of the frame structure 240 so that the lens may receive external light through a partial area (e.g., a camera area 237 of FIG. 2) of the front plate 202.

In an embodiment, the second camera module 212 (e.g., a rear camera) may be disposed between the frame structure 240 and the rear plate 211. In an embodiment, the second camera module 212 may be electrically connected to the first printed circuit board 250 through a connection member (e.g., a connector). In an embodiment, the second camera module 212 may be disposed such that the lens may receive external light through a camera area 284 of the rear plate 211 of the electronic device 200.

In an embodiment, the camera area 284 may be formed on the surface (e.g., a rear surface 200B of FIG. 2) of the rear plate 211. In an embodiment, the camera area 284 may be formed to be at least partially transparent so that external light may be incident to the lens of the second camera module 212. In an embodiment, at least a portion of the camera area 284 may protrude from the surface of the rear plate 211 to a predetermined height. However, it is not limited to thereto, and in an embodiment, the camera area 284 may form a plane substantially the same as the surface of the rear plate 211.

In an embodiment, the housing 230 of the electronic device 200 may mean a configuration or structure forming at least a portion of the exterior of the electronic device 200. In this regard, at least a portion of the front plate 202, the frame structure 240, and/or the rear plate 211 forming the exterior of the electronic device 200 may be referred to as the housing 230 of the electronic device 200.

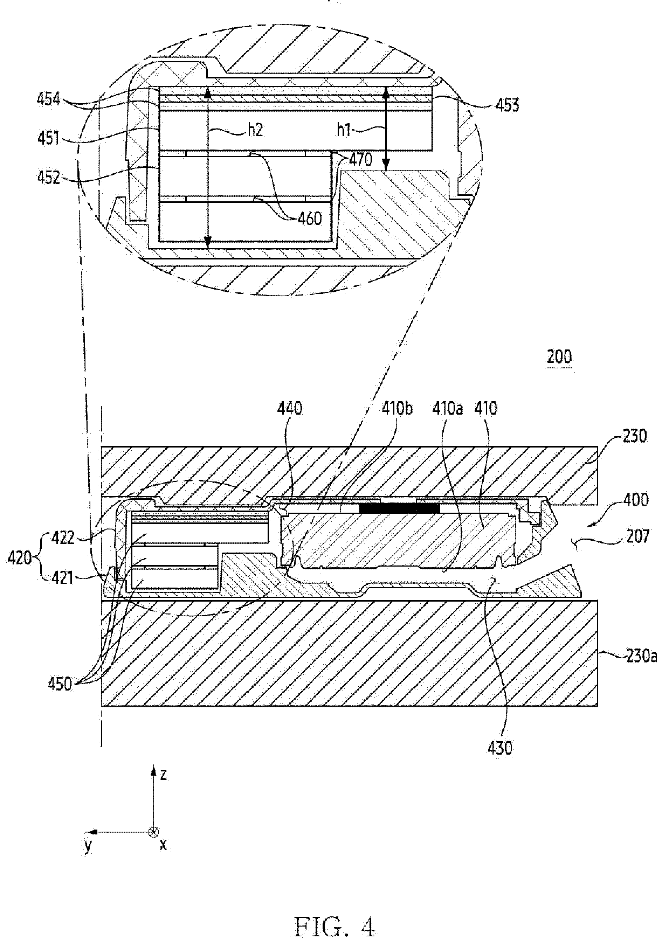

FIG. 4 is a cross-sectional view illustrating an example in which an exemplary electronic device is cut along line A-A' of FIG. 2.

Referring to FIG. 4, an electronic device 200 (e.g., an electronic device 101 of FIG. 1) according to an embodiment may include a housing 230 (e.g., a frame structure 240 of FIG. 3) and/or a speaker module 400.

According to an embodiment, the housing 230 may provide the appearance of the electronic device 200. For example, the housing 230 may form at least a portion of an exterior of the electronic device 200. For example, the housing 230 may accommodate components of the electronic device 200. For example, the housing 230 may provide an inner space in which the components of the electronic device 200 are disposed. For example, the speaker module 400 may be disposed within the housing 230.

According to an embodiment, the housing 230 may include a speaker hole 207. For example, the audio output from the speaker module 400 may be transmitted to the outside of the housing 230 (or the outside of the electronic device 200) through the speaker hole 207. The speaker hole 207 may penetrate a portion of the housing 230. For example, the speaker hole 207 may penetrate a portion of the frame structure 240 in the housing 230. For example, the speaker hole 207 may penetrate an exterior 230a of the housing 230. The exterior 230a of the housing 230 may mean one surface of the housing 230 exposed to the outside of the housing 230. For example, the exterior 230a of the housing 230 may be disposed between a first surface 200A (e.g., a first surface 200A of FIG. 2) of the housing 230 and a second surface 200B (e.g., a second surface 200B of FIG. 2) opposite to the first surface 200A. The exterior 230a of the housing 230 may connect the first surface 200A of the housing 230 and the second surface 200B of the housing 230. However, it is not limited thereto. For example, the speaker hole 207 may have a shape of a gap disposed between a display (e.g., a display 201 of FIGS. 2 and 3) and the housing 230.

According to an embodiment, the speaker module 400 may include a speaker 410, at least one enclosure 420, an audio path 430, a resonance space 440, a plurality of adsorption sheets 450, at least one air gap 460, and/or at least one attachment member 470.

According to an embodiment, the speaker 410 may be configured to output audio to provide auditory information to the user. For example, the speaker 410 may be configured to output audio through a first surface 410a of the speaker 410. A hole for emitting audio output from the speaker 410 may be disposed (or formed) on the first surface 410a of the speaker 410. A second surface 410b of the speaker 410 may be opposite to the first surface 410a. For example, the direction (e.g., +z direction) in which the second surface 410b of the speaker 410 faces may be opposite to the direction (e.g., -z direction) in which the first surface 410a of the speaker 410 faces. For example, the second surface 410b of the speaker 410 may be spaced apart from the first surface 410a of the speaker 410 in the direction (e.g., +z direction) in which the second surface 410b of the speaker 410 faces. According to an embodiment, the speaker 410 may include a diaphragm, a coil, and/or a magnet. For example, the diaphragm of the speaker 410 may be disposed on the first surface 410a of the speaker 410. For example, the diaphragm of the speaker 410 may form at least a portion of the first surface 410a of the speaker 410. The coil of the speaker 410 may be coupled to the diaphragm disposed on the first surface 410a of the speaker 410. For example, the coil of the speaker 410 may be disposed inside the speaker 410. The magnet of the speaker 410 may be disposed inside the speaker 410. The magnet in the speaker 410 may apply a magnetic field to the coil of the speaker 410. For example, when a current is applied to the coil of the speaker 410, the magnetic field may be generated by the coil of the speaker 410. The magnetic field generated as the current is applied to the coil in the speaker 410 may interact with the magnetic field generated by the magnet. As the magnetic field generated by the current applied to the coil and the magnetic field generated by the magnet interact, the coil may vibrate at a designated frequency together with the diaphragm coupled to the coil. For example, the diaphragm of the speaker 410 may vibrate by vibration of the coil in the direction (e.g., -z direction) in which the first surface 410a of the speaker 410 faces or the direction (e.g., +z direction) in which the second surface 410b of the speaker 410 faces. As air in the speaker module 400 adjacent to the diaphragm vibrates by vibrating the diaphragm of the speaker 410, audio may be generated. According to an embodiment, the speaker 410 may be disposed within the housing 230. The speaker 410 may be disposed inside the at least one enclosure 420 in the speaker module 400. The speaker 410 may be accommodated inside the at least one enclosure 420.

According to an embodiment, the at least one enclosure 420 may provide an exterior of the speaker module 400. The at least one enclosure 420 may surround (or cover) the speaker 410. According to an embodiment, the at least one enclosure 420 may include a first enclosure 421 and a second enclosure 422. The speaker 410 may be disposed inside the first enclosure 421 and the second enclosure 422. The first enclosure 421 may surround (or enclose) a portion of the speaker 410. For example, the first enclosure 421 may surround (or enclose) the first surface 410a of the speaker 410. For example, at least a portion of the first enclosure 421 may be disposed to correspond to the first surface 410a of the speaker 410. The second enclosure 422 may surround (or enclose) another portion of the speaker 410. For example, at least a portion of the second enclosure 422 may be disposed to correspond to the second surface 410b of the speaker 410. For example, the second enclosure 422 may surround (or enclose) the second surface 410b of the speaker 410. The second enclosure 422 may be coupled to the first enclosure 421. For example, the second enclosure 422 may be connected to the first enclosure 421. However, it is not limited thereto, and the first enclosure 421 may be integrally formed with the second enclosure 422.

According to an embodiment, the audio path 430 may output audio from the speaker 410 to the outside of the housing 230. The audio path 430 may provide a path through which audio from the speaker 410 may move to the outside of the housing 230. For example, the audio path 430 may be disposed on the first surface 410a of the speaker 410 through which audio is output. For example, the audio path 430 may be in contact with the first surface 410a of the speaker 410. For example, the audio path 430 may extend from the first surface 410a of the speaker 410 toward the speaker hole 207 of the housing 230. According to an embodiment, the audio path 430 may be surrounded (or enclosed) by the at least one enclosure 420. For example, audio path 430 may be surrounded (or enclosed) by the first enclosure 421 and/or the second enclosure 422. The audio path 430 may connect a space in the at least one enclosure 420 and the outside of the housing 230. For example, the audio path 430 may connect the space in the at least one enclosure 420 and the speaker hole 207. Audio output through the first surface 410a of the speaker 410 may be moved to the speaker hole 207 along the audio path 430 and then output to the outside of the housing 230.

According to an embodiment, the resonance space 440 may provide resonance of audio output by the diaphragm of the speaker 410. For example, the resonance space 440 may provide space for a back volume of audio from the speaker 410. According to an embodiment, the resonance space 440 may be separated from the audio path 430. The resonance space 440 may be disconnected from the audio path 430. For example, while the audio is output from the speaker 410, the entire speaker 410 may vibrate due to vibration generated by the diaphragm of the speaker 410. Due to the vibration of the speaker 410, through the second surface 410b of the speaker 410, another audio having a phase opposite to a phase of the audio output through the first surface 410a of the speaker 410 may be output. In case that the audio path 430 and the resonance space 440 are connected to each other, destructive interference may occur between the audio output through the first surface 410a of the speaker 410 and other audio output through the second surface 410b of the speaker 410. The resonance space 440 may reduce the destructive interference between the audio output through the first surface 410a and other audio output through the second surface 410b, by being disconnected from the audio path 430, which is a moving path of the audio output through the first surface 410a. According to an embodiment, the resonance space 440 may be disposed within the at least one enclosure 420. For example, the resonance space 440 may extend from the second surface 410b of the speaker 410 within the at least one enclosure 420. For example, at least a portion of the resonance space 440 may be disposed on the second surface 410b of the speaker 410. For example, the portion of the resonance space 440 may be in contact with the second surface 410b of the speaker 410. According to an embodiment, the resonance space 440 may be sealed by the at least one enclosure 420 and the speaker 410. For example, the resonance space 440 may be sealed by the first enclosure 421, the second enclosure 422, and/or the speaker 410 such that it is disconnected from audio path 430. According to an embodiment, the resonance space 440 may include a shape having a step. For example, the size of the resonance space 440 may be changed inside the at least one enclosure 420. For example, a shape of the resonance space 440 may not correspond to a shape of the speaker 410. For example, a thickness h1 of one region of the resonance space 440 may be different from a thickness h2 of another region of the resonance space. A thickness of one component may mean the distance in a direction (e.g., +z direction and/or -z direction) parallel to the direction (e.g., -z direction) in which the first surface 410a of the speaker 410 faces, and the corresponding expression may be used substantially the same below.

According to an embodiment, the plurality of adsorption sheets 450 may substantially expand the size of the resonance space 440 without expanding the physical size of the resonance space 440. For example, the plurality of adsorption sheets 450 may adsorb at least a portion of the air in the resonance space 440. As at least a portion of the air in the resonance space 440 is adsorbed by the plurality of adsorption sheets 450, the size of the resonance space 440 may be substantially expanded. For example, each of the plurality of adsorption sheets 450 may include a porous material including micro holes that adsorb at least a portion of the air in the resonance space 440. For example, each of the plurality of adsorption sheets 450 may include at least one of zeolite or activated carbon. For example, the plurality of adsorption sheets 450 may have the form of a sheet that does not include grain. For example, the plurality of adsorption sheets 450 may have a shape of a plate (or plane) extending along a direction (e.g., +x direction, -x direction, +y direction, and/or -y direction) perpendicular to the direction (e.g., -z direction) in which the first surface 410a of the speaker 410 faces. According to an embodiment, the plurality of adsorption sheets 450 may be disposed inside the at least one enclosure 420. The plurality of adsorption sheets 450 may be disposed within the resonance space 440. At least a portion of the plurality of adsorption sheets 450 may be laminated on each other within the resonance space 440. For example, at least a portion of the plurality of adsorption sheets 450 may be arranged along the direction (e.g., -z direction) in which the first surface 410a of the speaker 410 faces or the direction (e.g., +z direction) in which the second surface 410b of the speaker 410 faces. For example, at least a portion of the plurality of adsorption sheets 450 may be laminated along the direction (e.g., -z direction) in which the first surface 410a of the speaker 410 faces. For example, at least a portion of the plurality of adsorption sheets 450 may be laminated along the direction (e.g., +z direction) in which the second surface 410b of the speaker 410 faces. For example, a thickness of each of the plurality of adsorption sheets 450 may be 0.4mm to 0.8mm, but is not limited thereto. According to an embodiment, the plurality of adsorption sheets 450 may be disconnected from each other. The plurality of adsorption sheets 450 may be separated from each other. For example, the plurality of adsorption sheets 450 may include a first adsorption sheet 451 and a second adsorption sheet 452 that are disconnected from each other. The second adsorption sheet 452 may be disposed on the first adsorption sheet 451. In the following description, the first adsorption sheet 451 and the second adsorption sheet 452 may be used as meaning referring to one of the plurality of adsorption sheets 450 and another one of the plurality of adsorption sheets 450. Hereinafter, for example, the first adsorption sheet 451 is described as one of the plurality of adsorption sheets 450 adjacent to a support member 453, but a sheet referred to by the first adsorption sheet 451 may be different.

According to an embodiment, the first adsorption sheet 451 may be attached to the support member 453. For example, the first adsorption sheet 451 may be attached to the support member 453 by at least one adhesive member 454. The support member 453 may support the plurality of adsorption sheets 450 within at least one enclosure 420. The support member 453 may include polyethylene terephthalate (PET), but is not limited thereto. For example, a thickness of the support member 453 may be 0.05mm, but is not limited thereto.

According to an embodiment, the at least one adhesive member 454 may attach the support member 453 to the at least one enclosure 420. The at least one adhesive member 454 may attach the support member 453 to the first adsorption sheet 451. For example, the at least one adhesive member 454 may include an adhesive material. For example, a thickness of the at least one adhesive member 454 may be 0.03mm between the at least one enclosure 420 and the support member 453, but is not limited thereto. For example, the thickness of the at least one adhesive member 454 may be 0.03mm between the support member 453 and the first adsorption sheet 451, but is not limited thereto.

According to an embodiment, a size of the second adsorption sheet 452 may be different from a size of the first adsorption sheet 451. For example, a thickness of the second adsorption sheet 452 may be different from a thickness of the first adsorption sheet 451. For example, a width of the second adsorption sheet 452 may be different from a width of the first adsorption sheet 451. For example, the width of the first adsorption sheet 451 may be greater than the width of the second adsorption sheet 452. A width of one component may mean a distance in a direction (e.g., -y direction, +y direction) substantially perpendicular to the direction (e.g., -z direction) in which the first surface 410a of the speaker 410 faces, the corresponding expression may be used substantially the same unless otherwise stated below. For example, as the components disposed within the electronic device 200 become diverse, a shape of the space within the housing 230 in which the speaker module 400 may be disposed may become diverse. As the shape of the space within the housing 230 become diverse, the shape of the resonance space 440 within the speaker module 400 may become diverse. For example, a thickness of the resonance space 440 may be changed within the at least one enclosure 420. In case that the sizes of the plurality of adsorption sheets 450 are the same each other, the number (and/or size) of the plurality of adsorption sheets 450 disposed within the resonance space 440 may be reduced. If the number (and/or size) of the plurality of adsorption sheets 450 disposed within the resonance space 440 is reduced, the quality of audio from the speaker 410 transmitted to the outside of the housing 230 may be reduced. Since a size of a portion (e.g., the first adsorption sheet 451) of the plurality of adsorption sheets 450 disposed in the resonance space 440 is different from a size of another portion (e.g., the second adsorption sheet 452) of the plurality of adsorption sheets 450, the electronic device 200 according to an embodiment may provide a structure in which the entire shape of the plurality of adsorption sheets 450 corresponds to the shape of the resonance space 440. As the entire shape of the plurality of adsorption sheets 450 corresponds to the shape of the resonance space 440, the number (and/or size) of the plurality of adsorption sheets 450 disposed within the resonance space 440 may increase compared to when the plurality of adsorption sheets 450 have the same size each other. As the number (and/or size) of the plurality of adsorption sheets 450 disposed within the resonance space 440 increases, the quality of audio output to the outside of the housing 230 may be improved. However, it should be kept in mind that in the above description, the fact that the sizes of the first adsorption sheet 451 and the second adsorption sheet 452 are different does not mean that the sizes of each of the plurality of adsorption sheets 450 are all different from each other. For example, when the size of the first adsorption sheet 451, which is one adsorption sheet among the plurality of adsorption sheets 450 and the size of the second adsorption sheet 452, which is another adsorption sheet are different from each other, the size of the other adsorption sheet among the plurality of adsorption sheets 450 may be substantially the same as one of the first adsorption sheet 451, and the second adsorption sheet 452.

According to an embodiment, materials included in each of the plurality of adsorption sheets 450 may be different from each other. For example, the material included in the first adsorption sheet 451 and the material included in the second adsorption sheet 452 may be different from each other. According to an embodiment, each of the plurality of adsorption sheets 450 may include different materials according to the distance from the speaker 410. For example, the porosity of each of the plurality of adsorption sheets 450 may be different according to the distance from the speaker 410. The speaker 410 may be closer to the first adsorption sheet 451 among the first adsorption sheet 451 and the second adsorption sheet 452. For example, the porosity of the first adsorption sheet 451 relatively close to the speaker 410 may be lower than the porosity of the second adsorption sheet 452 relatively far from the speaker 410. For example, the first adsorption sheet 451 may be formed of zeolite having the relatively low porosity, and the second adsorption sheet 452 may be formed of activated carbon having the relatively high porosity, but are not limited thereto. For example, the closer the distance from the speaker 410 is, the higher the likelihood of being damaged by vibration generated by the speaker 410. As the porosity increases, the rigidity of the plurality of adsorption sheets 450 may decrease, so the porosity of the first adsorption sheet 451 relatively close to the speaker 410 may be lower than the porosity of the second adsorption sheet 452 relatively far from the speaker 410. As the porosity of the first adsorption sheet 451 is relatively lower than the porosity of the second adsorption sheet 452, the rigidity of the first adsorption sheet 451 may be higher than the rigidity of the second adsorption sheet 452.

According to an embodiment, the at least one air gap 460 may increase contact between the plurality of adsorption sheets 450 and at least a portion of the air in the resonance space 440. For example, the at least one air gap 460 may increase the contact area between the plurality of adsorption sheets 450 and at least a portion of the air in the resonance space 440. According to an embodiment, the at least one air gap 460 may be disposed between the plurality of adsorption sheets 450. For example, the at least one air gap 460 may be interposed between the first adsorption sheet 451 and the second adsorption sheet 452. As the at least one air gap 460 is interposed between the first adsorption sheet 451 and the second adsorption sheet 452, a contact area between the air in the resonance space 440 and the first adsorption sheet 451 and a contact area between the air in the resonance space 440 and the second adsorption sheet 452 may be expanded. As each of the plurality of adsorption sheets 450 and the air in the resonance space 440 become easier to contact, the plurality of adsorption sheets 450 may easily adsorb at least a portion of the air in the resonance space 440.

According to an embodiment, the at least one attachment member 470 may be interposed between the plurality of adsorption sheets 450. The at least one attachment member 470 may attach one (e.g., the first adsorption sheet 451) of the plurality of adsorption sheets 450 to another (e.g., the second adsorption sheet 452) of the plurality of adsorption sheets 450. The at least one attachment member 470 may space each of the plurality of adsorption sheets 450 apart. For example, as the at least one attachment member 470 is interposed between the first adsorption sheet 451 and the second adsorption sheet 452, the first adsorption sheet 451 and the second adsorption sheet 452 may be spaced apart from each other by a distance corresponding to a thickness of the at least one attachment member 470. For example, the at least one attachment member 470 may have the form of a tape including the adhesive material, but is not limited thereto.

As described above, since the size of a portion of the plurality of adsorption sheets 450 is different from the size of another portion of the plurality of adsorption sheets 450 to correspond to the shape of the resonance space 440 whose thickness changes within the enclosure 420, the electronic device 200 according to an embodiment may provide a structure in which the quality of audio transmitted to the outside of the housing 230 is improved. Since the at least one air gap 460 is disposed between the plurality of adsorption sheets 450, the electronic device 200 according to an embodiment may provide a structure in which the contact area between the plurality of adsorption sheets 450 and the air in the resonance space 440 may be expanded.

Hereinafter, the plurality of adsorption sheets 450 will be described based on the first adsorption sheet 451 and the second adsorption sheet 452, but the description of the first adsorption sheet 451 and the second adsorption sheet 452 may be applied substantially the same to the remaining portions of the plurality of adsorption sheets 450.

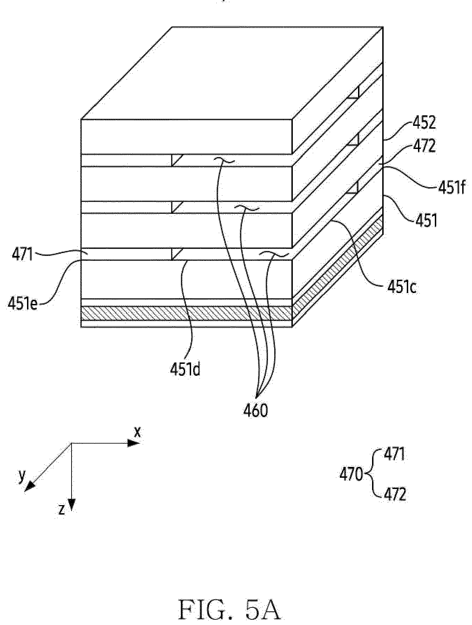

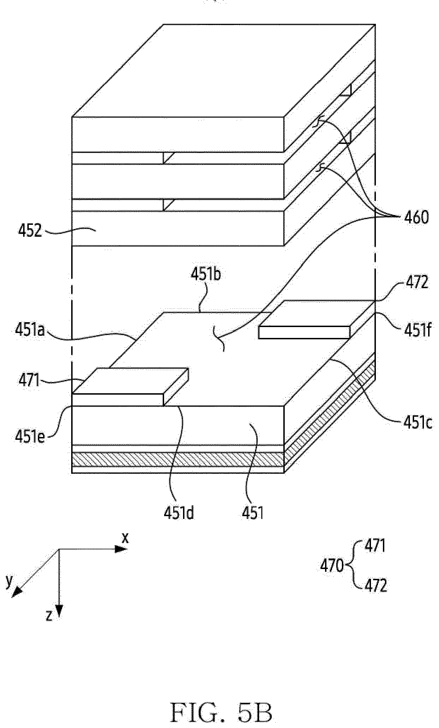

FIG. 5A is a perspective view illustrating a plurality of exemplary adsorption sheets. FIG. 5B is an exploded perspective view illustrating a plurality of exemplary adsorption sheets.

Referring to FIGS. 5A and 5B, according to an embodiment, a first adsorption sheet 451 may include a first edge 451a, a second edge 451b, a third edge 451c, and/or a fourth edge 451d. The first edge 451a may extend along a first direction (e.g., -y direction). The second edge 451b may be connected to the first edge 451a. For example, the second edge 451b may be connected to one end of the first edge 451a. For example, the second edge 451b may extend along a second direction (e.g., +x direction) perpendicular to the first direction (e.g., -y direction). The third edge 451c may be connected to the second edge 451b. The third edge 451c may be opposite to the first edge 451a. For example, the third edge 451c may be connected to the other end of the second edge 451b opposite to one end of the second edge 451b connected to the first edge 451a. For example, the third edge 451c may be parallel to the first edge 451a. For example, the third edge 451c may extend from the fourth edge 451d along the first direction (e.g., -y direction). The fourth edge 451d may connect the first edge 451a and the third edge 451c. The fourth edge 451d may be opposite to the second edge 451b. For example, the fourth edge 451d may extend from the other end of the first edge 451a opposite to one end of the first edge 451a connected to the second edge 451b to the third edge 451c along the second direction (e.g., +x direction).

According to an embodiment, at least one attachment member 470 may include a first attachment member 471 and a second attachment member 472. The first attachment member 471 may be closer to a first corner 451e among the first corner 451e of the first adsorption sheet 451, and a second corner 451f opposite to the first corner 451e. The first corner 451e may mean a region of the first adsorption sheet 451 including a location where the first edge 451a and the fourth edge 451d are in contact. The second corner 451f may mean another region of the first adsorption sheet 451 including a location where the second edge 451b and the third edge 451c are in contact. For example, the first attachment member 471 may be disposed on the first corner 451e. The second attachment member 472 may be spaced apart from the first attachment member 471. The second attachment member 472 may be disconnected from the first attachment member 471. The second attachment member 472 may be closer to the second corner 451f among the first corner 451e and the second corner 451f of the first adsorption sheet 451. For example, the second attachment member 472 may be disposed on the second corner 451f. As the second attachment member 472 and the first attachment member 471 are spaced apart from each other, at least one air gap 460 may be located between the first attachment member 471 and the second attachment member 472. For example, the at least one air gap 460 may be referred to as a space between the first adsorption sheet 451 and a second adsorption sheet 452, excluding the first attachment member 471 and the second attachment member 472.

As described above, since the at least one air gap 460 is disposed between the first adsorption sheet 451 and the second adsorption sheet 452, an electronic device (e.g., an electronic device 200 of FIG. 4) according to an embodiment may provide a structure in which a contact area of air in a resonance space (e.g., a resonance space 440 of FIG. 4) and a plurality of adsorption sheets (e.g., a plurality of adsorption sheets 450 of FIG. 4) may be expanded.

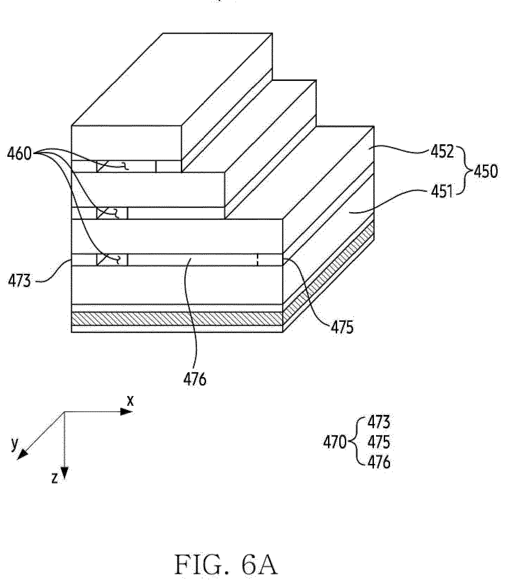

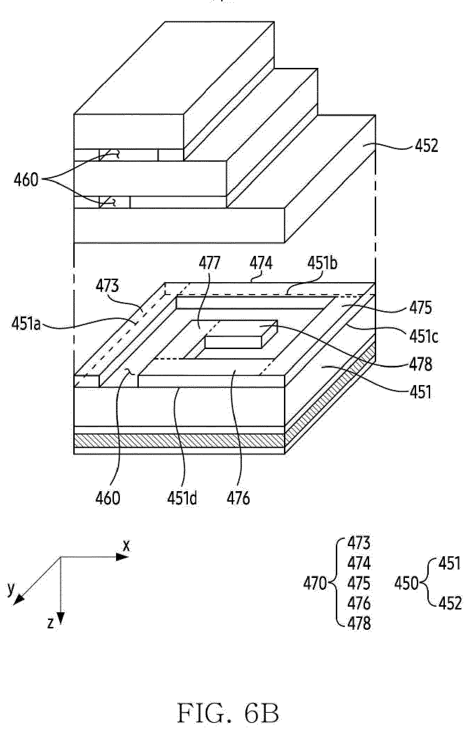

FIG. 6A is a perspective view illustrating a plurality of exemplary adsorption sheets. FIG. 6B is an exploded perspective view illustrating a plurality of exemplary adsorption sheets.

Referring to FIGS. 6A and 6B, at least one attachment member 470 according to an embodiment may include a third attachment member 473, a fourth attachment member 474, a fifth attachment member 475, a sixth attachment member 476, a seventh attachment member 477, and/or an eighth attachment member 478. Hereinafter, the third attachment member 473, the fourth attachment member 474, the fifth attachment member 475, the sixth attachment member 476, the seventh attachment member 477, and/or the eighth attachment member 478 are described as separate members, but this is for convenience of explanation. For example, the third attachment member 473, the fourth attachment member 474, the fifth attachment member 475, the sixth attachment member 476, the seventh attachment member 477, and/or the eighth attachment member 478 may each mean portions of the at least one attachment member 470. For example, the third attachment member 473, the fourth attachment member 474, the fifth attachment member 475, the sixth attachment member 476, the seventh attachment member 477, and/or the eighth attachment member 478 may be referred to as a third portion, a fourth portion, a fifth portion, a sixth portion, a seventh portion, and/or a eighth portion of the at least one attachment member 470 formed integrally with each other.

According to an embodiment, the third attachment member 473 may extend along a first direction (e.g., -y direction). For example, the third attachment member 473 may extend along a first edge 451a of a first adsorption sheet 451. For example, the third attachment member 473 may be substantially parallel to the first edge 451a of the first adsorption sheet 451.

According to an embodiment, the fourth attachment member 474 may extend along a second direction (e.g., +x direction). For example, the fourth attachment member 474 may extend from the third attachment member 473 along the second direction (e.g., +x direction). For example, the fourth attachment member 474 may extend along a second edge 451b of the first adsorption sheet 451. For example, the fourth attachment member 474 may be substantially parallel to the second edge 451b of the first adsorption sheet 451.

According to an embodiment, the fifth attachment member 475 may extend along a third direction (e.g., +y direction) opposite to the first direction (e.g., -y direction). For example, the fifth attachment member 475 may extend from the fourth attachment member 474 along the third direction (e.g., +y direction). For example, the fifth attachment member 475 may extend along a third edge 451c of the first adsorption sheet 451. For example, the fifth attachment member 475 may be substantially parallel to the third edge 451c.

According to an embodiment, the sixth attachment member 476 may extend along a fourth direction (e.g., -x direction) opposite to the second direction (e.g., +x direction). For example, the sixth attachment member 476 may extend from the fifth attachment member 475 along the fourth direction (e.g., -x direction). For example, the sixth attachment member 476 may extend along a fourth edge 451d of the first adsorption sheet 451. For example, the sixth attachment member 476 may be substantially parallel to the fourth edge 451d. According to an embodiment, the sixth attachment member 476 may be spaced apart from the third attachment member 473. The sixth attachment member 476 may be disconnected from the third attachment member 473. For example, one end of the sixth attachment member 476 may be connected to the fifth attachment member 475, and the other end of the sixth attachment member 476 opposite to one end of the sixth attachment member 476 may be spaced apart from the third attachment member 473.

According to an embodiment, the seventh attachment member 477 may extend along the first direction (e.g., -y direction). For example, the seventh attachment member 477 may extend from the sixth attachment member 476 along the first direction (e.g., -y direction). The seventh attachment member 477 may be spaced apart from the third attachment member 473, the fourth attachment member 474, and/or the fifth attachment member 475. For example, one end of the seventh attachment member 477 may be connected to the sixth attachment member 476. For example, the other end of the seventh attachment member 477, which is opposite to one end of the seventh attachment member 477, may be spaced apart from the third attachment member 473, the fourth attachment member 474, the fifth attachment member 475, and/or the sixth attachment member 476.

According to an embodiment, the eighth attachment member 478 may extend along the second direction (e.g., +x direction). For example, the eighth attachment member 478 may extend from the seventh attachment member 477 along the second direction (e.g., +x direction). The eighth attachment member 478 may be spaced apart from the third attachment member 473, the fourth attachment member 474, the fifth attachment member 475, and/or the sixth attachment member 476. For example, one end of the eighth attachment member 478 may be connected to the seventh attachment member 477. For example, the other end of the eighth attachment member 478, which is opposite to one end of the eighth attachment member 478, may be spaced apart from the third attachment member 473, the fourth attachment member 474, the fifth attachment member 475, the sixth attachment member 476, and/or the seventh attachment member 477.

According to an embodiment, at least one air gap 460 may be located between the third attachment member 473, the fourth attachment member 474, the fifth attachment member 475, the sixth attachment member 476, the seventh attachment member 477, and/or the eighth attachment member 478. For example, the at least one air gap 460 may be surrounded (or enclosed) by the third attachment member 473, the fourth attachment member 474, the fifth attachment member 475, the sixth attachment member 476, the seventh attachment member 477, and/or the eighth attachment member 478.

As described above, since the at least one air gap 460 defined by the at least one attachment member 470 is disposed between the first adsorption sheet 451 and the second adsorption sheet 452, an electronic device (e.g., an electronic device 200 of FIG. 4) according to an embodiment may provide a structure in which a contact area of air in a resonance space (e.g., a resonance space 440 of FIG. 4) and a plurality of adsorption sheets (e.g., a plurality of adsorption sheets 450 of FIG. 4) may be expanded.

Meanwhile, in FIG. 6B, it is illustrated that the at least one attachment member 470 extends along a direction that rotates clockwise with respect to the center of the first adsorption sheet 451 on one surface of the first adsorption sheet 452 facing the second adsorption sheet 452, but is not limited thereto. For example, the at least one attachment member 470 may extend along a direction that rotates counterclockwise with respect to the center of the first adsorption sheet 451 on one surface of the first adsorption sheet 451 facing the second adsorption sheet 452.

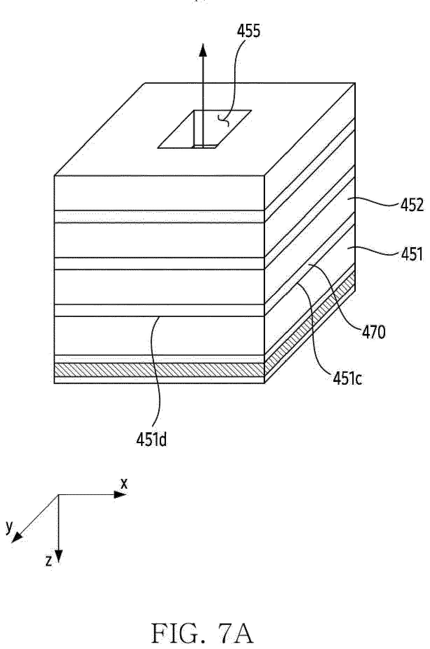

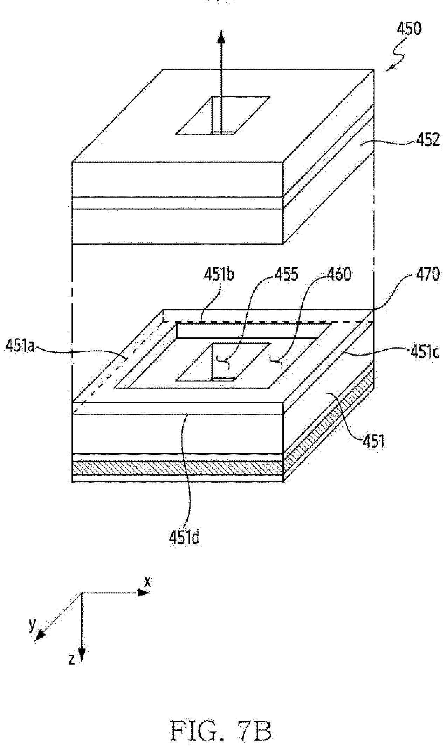

FIG. 7A is a perspective view illustrating a plurality of exemplary adsorption sheets. FIG. 7B is an exploded perspective view illustrating a plurality of exemplary adsorption sheets.

Referring to FIGS. 7A and 7B, according to an embodiment, a plurality of adsorption sheets 450 may include at least one through hole 455. Each of a first adsorption sheet 451 and a second adsorption sheet 452 may include the at least one through hole 455 penetrating each of the first adsorption sheet 451 and the second adsorption sheet 452. For example, the number of the at least one through hole 455 may correspond to the number of the plurality of adsorption sheets 450, but is not limited thereto. For example, the number of the at least one through hole 455 may be greater or less than the number of the plurality of adsorption sheets 450. According to an embodiment, the at least one through hole 455 may penetrate at least a portion of each of the plurality of adsorption sheets 450. For example, the at least one through hole 455 may penetrate the first adsorption sheet 451. For example, the at least one through hole 455 may penetrate the second adsorption sheet 452. According to an embodiment, the at least one through hole 455 may be connected to at least one air gap 460 interposed between the plurality of adsorption sheets 450. For example, in case that the at least one through hole 455 includes a plurality of through holes, the at least one air gap 460 may be interposed between the plurality of through holes. Since an empty space may be added to the inside of the plurality of adsorption sheets 450 through the at least one through hole 455, a contact area between the plurality of adsorption sheets 450 and a resonance space (e.g., a resonance space 440 of FIG. 4) may be increased.

According to an embodiment, at least one attachment member 470 may be disposed along the edges of each of the plurality of adsorption sheets 450. For example, the at least one attachment member 470 may be disposed along edges 451a, 451b, 451c, and 451d of the first adsorption sheet 451. For example, the at least one attachment member 470 may have the form of a closed loop between the first adsorption sheet 451 and the second adsorption sheet 452. According to an embodiment, the at least one attachment member 470 may surround the at least one air gap 460 and the at least one through hole 455. For example, the at least one attachment member 470 may surround the at least one air gap 460 between the first adsorption sheet 451 and the second adsorption sheet 452 and the at least one through hole 455 of the first adsorption sheet 451.

As described above, an electronic device (e.g., an electronic device 200 of FIG. 2) according to an embodiment may provide a structure in which a contact area between the plurality of adsorption sheets 450 and air in the resonance space (e.g., the resonance space 440 of FIG. 4) may be expanded by the at least one through hole 455 penetrating each of the plurality of adsorption sheets 450.

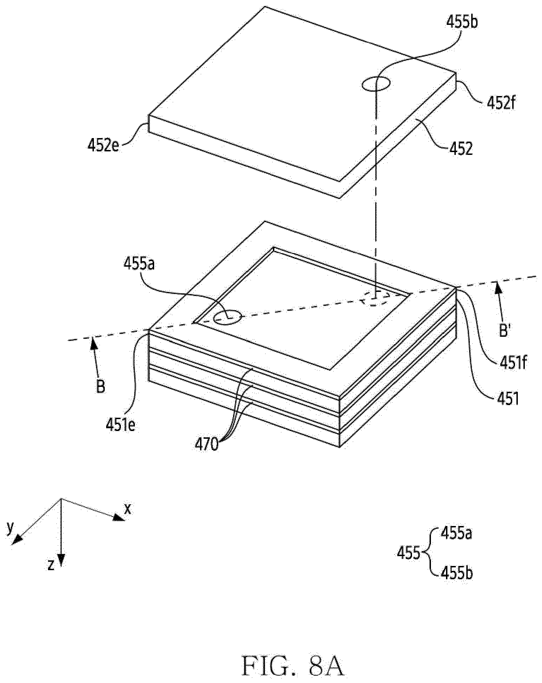

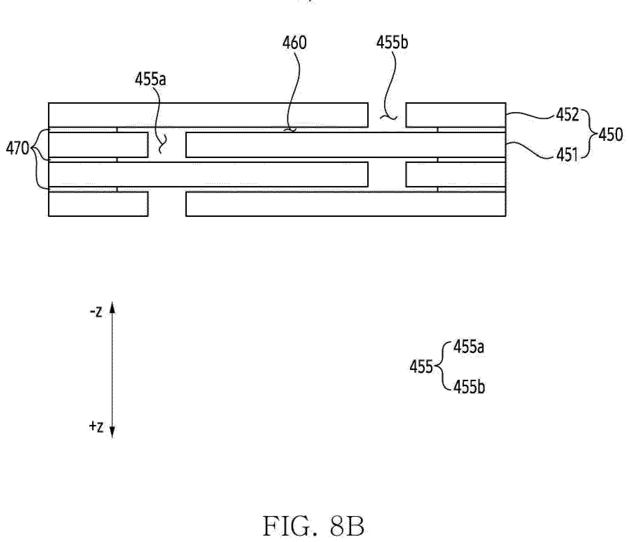

FIG. 8A is an exploded perspective view illustrating a plurality of exemplary adsorption sheets. FIG. 8B is a cross-sectional view illustrating an example in which a plurality of exemplary adsorption sheets are cut along line B-B' of FIG. 8A.

Referring to FIGS. 8A and 8B, according to an embodiment, at least one attachment member 470 may be interposed between a first adsorption sheet 451 and a second adsorption sheet 452. According to an embodiment, at least one through hole 455 may include a first through hole 455a and a second through hole 455b. The first through hole 455a may penetrate the first adsorption sheet 451. For example, the first through hole 455a may be closer to a first corner 451e among the first corner 451e and a second corner 451f of the first adsorption sheet 451. The second through hole 455b may penetrate the second adsorption sheet 452 disposed on the first adsorption sheet 451. According to an embodiment, when the second adsorption sheet 452 is viewed from above (e.g., -z direction) in a state in which the second adsorption sheet 452 is disposed above (e.g., -z direction) the first adsorption sheet 451, the second through hole 455b may be closer to the second corner 451f among the first corner 451e and the second corner 451f of the first adsorption sheet 451. According to an embodiment, the second adsorption sheet 452 may include a third corner 452e and a fourth corner 452f. The third corner 452e may correspond to the first corner 451e of the first adsorption sheet 451. For example, when the second adsorption sheet 452 is viewed from above (e.g., -z direction), the third corner 452e may overlap the first corner 451e of the first adsorption sheet 451. The fourth corner 452f may be opposite to the third corner 452e. When the second adsorption sheet 452 is viewed from above (e.g., -z direction), the fourth corner 452f may overlap the second corner 451f of the first adsorption sheet 451. The second through hole 455b may be closer to the fourth corner 452f among the third corner 452e and the fourth corner 452f.

According to an embodiment, the second through hole 455b may be disposed to be staggered from the first through hole 455a. The second through hole 455b may be disposed so as not to overlap the first through hole 455a. When the second adsorption sheet 452 is viewed from above (e.g., -z direction) in the state in which the second adsorption sheet 452 is disposed above (e.g., -z direction) the first adsorption sheet 451, the second through hole 455b may be disposed outside the first through hole 455a. For example, when the second adsorption sheet 452 is viewed from above along the direction (e.g., +z direction) from the second adsorption sheet 452 toward the first adsorption sheet 451, the second through hole 455b may be disposed outside the first through hole 455a. For example, when the second adsorption sheet 452 is viewed from above along the direction (e.g., +z direction) from the second adsorption sheet 452 toward the first adsorption sheet 451, the second through hole 455b may be spaced apart from the first through hole 455a. For example, when the second adsorption sheet 452 is viewed from above (e.g., -z direction) in the state in which the second adsorption sheet 452 is disposed above (e.g., -z direction) the first adsorption sheet 451, the second through hole 455b may be closer to the second corner 451f among the first corner 451e and the second corner 451f of the first adsorption sheet 451.

According to an embodiment, at least one air gap 460 may be connected to the at least one through hole 455 by being located between the first adsorption sheet 451 and the second adsorption sheet 452. For example, the at least one air gap 460 may be connected to the first through hole 455a penetrating the first adsorption sheet 451 and the second through hole 455b penetrating the second adsorption sheet 452. As the at least one air gap 460 is connected to the at least one through hole 455, a contact area between a plurality of adsorption sheets 450 and air in a resonance space (e.g., a resonance space 440 of FIG. 4) may be increased.

As described above, an electronic device (e.g., an electronic device 200 of FIG. 4) according to an embodiment may provide a structure in which the contact area between the plurality of adsorption sheets 450 and the air in the resonance space 440 may be expanded by the at least one through hole 455 penetrating each of the plurality of adsorption sheets 450.

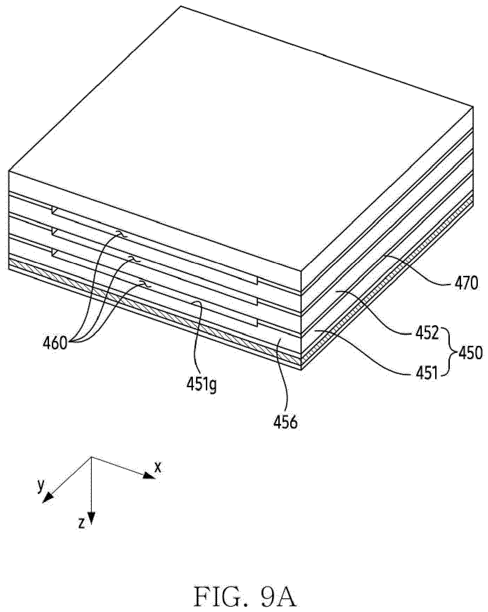

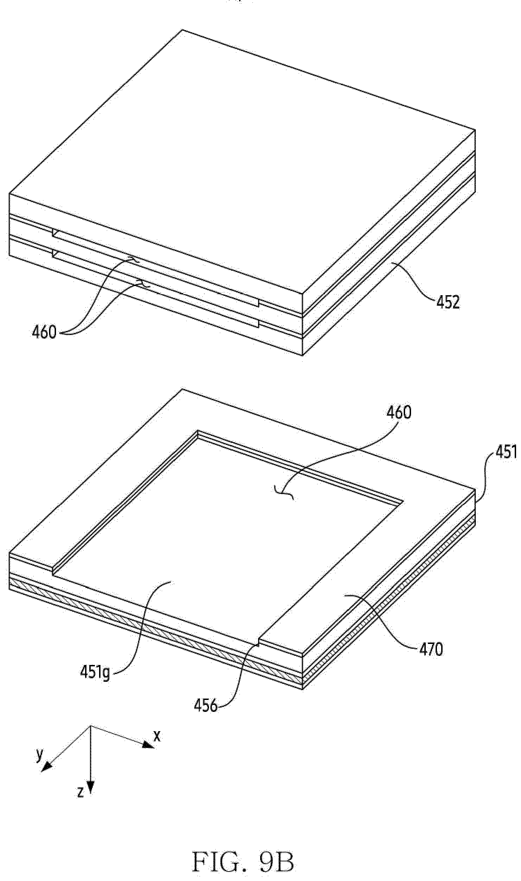

FIG. 9A is a perspective view illustrating a plurality of exemplary adsorption sheets. FIG. 9B is an exploded perspective view illustrating a plurality of exemplary adsorption sheets.

Referring to FIGS. 9A and 9B, according to an embodiment, at least a portion of a plurality of adsorption sheets 450 may include a step structure. For example, a first adsorption sheet 451 may include a stepped portion 456. The stepped portion 456 may protrude from one surface 451g of the first adsorption sheet 451 facing a second adsorption sheet 452. For example, the stepped portion 456 may extend from the one surface 451g of the first adsorption sheet 451 along a direction (e.g., -z direction) in which the one surface 451g of the first adsorption sheet 451 faces. For example, a distance between the stepped portion 456 and the second adsorption sheet 452 may be shorter than a distance between the one surface 451g of the first adsorption sheet 451 and the second adsorption sheet 452 except the stepped portion 456. According to an embodiment, at least one attachment member 470 may be disposed on the stepped portion 456.

According to an embodiment, at least one air gap 460 may be defined by the stepped portion 456 and the at least one attachment member 470 between the first adsorption sheet 451 and the second adsorption sheet 452. For example, the at least one air gap 460 may be surrounded by the stepped portion 456 and the at least one attachment member 470.

As described above, since the at least one air gap 460 is formed between the plurality of adsorption sheets 450 by the stepped portion 456 and the at least one attachment member 470, an electronic device (e.g., an electronic device 200 of FIG. 4) according to an embodiment may provide a structure in which a contact area between the plurality of adsorption sheets 450 and air in a resonance space (e.g., a resonance space 440 of FIG. 4) may be expanded.

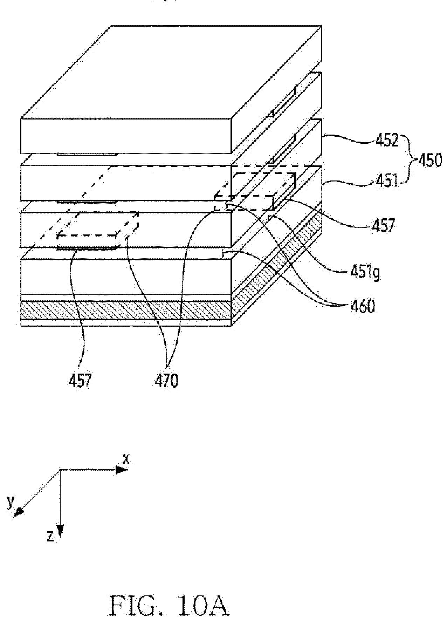

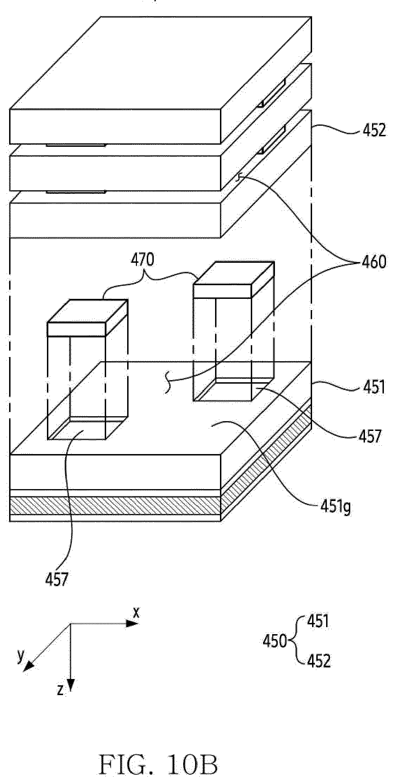

FIG. 10A is a perspective view illustrating a plurality of exemplary adsorption sheets. FIG. 10B is an exploded perspective view illustrating a plurality of exemplary adsorption sheets.

Referring to FIGS. 10A and 10B, according to an embodiment, each of a plurality of adsorption sheets 450 may include at least one accommodating groove 457 formed by recessing a portion of each of the plurality of adsorption sheets 450 inward. For example, a first adsorption sheet 451 may include the at least one accommodating groove 457 disposed (or formed) on one surface 451g of the first adsorption sheet 451 facing a second adsorption sheet 452. The accommodating groove 457 may be formed by recessing the one surface 451g of the first adsorption sheet 451 inward.

According to an embodiment, at least one attachment member 470 may be accommodated in the at least one accommodating groove 457. The at least one attachment member 470 may be disposed within the at least one accommodating groove 457. According to an embodiment, the at least one attachment member 470 may be in contact with the second adsorption sheet 452. For example, a thickness of the at least one attachment member 470 may be thicker than a thickness of the at least one accommodating groove 457. As the thickness of the at least one attachment member 470 is thicker than that of the at least one accommodating groove 457, a portion of the at least one attachment member 470 may protrude to the outside of the at least one accommodating groove 457. As the at least one attachment member 470 is in contact with the second attachment sheet 452 within the at least one accommodating groove 457, the one surface 451g of the first adsorption sheet 451 except the region in which the at least one attachment member 470 is disposed may be spaced apart from the second adsorption sheet 452. For example, the one surface 451g of the first adsorption sheet 451 except the region in which the at least one attachment member 470 is disposed may be spaced apart from the second adsorption sheet 452 by a distance corresponding to the thickness of the at least one attachment member 470 protruding to the outside of the at least one accommodating groove 457.

According to an embodiment, at least one air gap 460 may surround (or enclose) the at least one attachment member 470 protruding from the one surface 451g of the first adsorption sheet 451.

As described above, since the at least one air gap 460 is formed between the plurality of adsorption sheets 450 by the at least one attachment member 470 protruding to the outside of the at least one accommodating groove 457, an electronic device (e.g., an electronic device 200 of FIG. 4) according to an embodiment may provide a structure in which a contact area between the plurality of adsorption sheets 450 and the air in a resonance space (e.g., a resonance space 440 of FIG. 4) may be expanded.

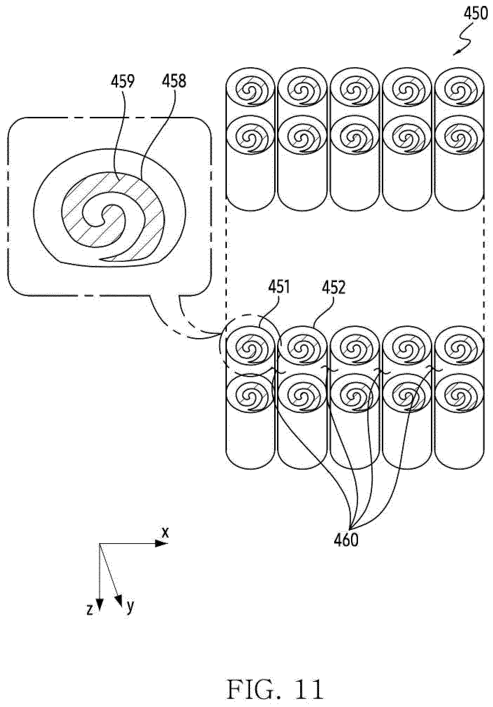

FIG. 11 is a perspective view illustrating a plurality of exemplary adsorption sheets.

Referring to FIG. 11, according to an embodiment, a plurality of adsorption sheets 450 may be arranged along a second direction (e.g., +x direction) or a fourth direction (e.g., -x direction). For example, the plurality of adsorption sheets 450 may be laminated along the second direction (e.g., +x direction). For example, the plurality of adsorption sheets 450 may be laminated along the fourth direction (e.g., -x direction). For example, a first adsorption sheet 451 and a second adsorption sheet 452 included in the plurality of adsorption sheets 450 may be laminated along the second direction (e.g., +x direction).

According to an embodiment, the plurality of adsorption sheets 450 may be bent to have a curvature. The plurality of adsorption sheets 450 may have a wound shape. For example, each of the plurality of adsorption sheets 450 may have a shape rotated along a clockwise direction from the center of each of the plurality of adsorption sheets 450, but is not limited thereto. For example, each of the plurality of adsorption sheets 450 may have a shape rotated along a counterclockwise direction from the center of each of the plurality of adsorption sheets 450. As the plurality of adsorption sheets 450 have the wound shape, an internal space 458 may be disposed (or formed) within each of the plurality of adsorption sheets 450. The internal space 458 may be surrounded (or enclosed) by each of the plurality of adsorption sheets 450. For example, the plurality of adsorption sheets 450 may be wound in a roll.

According to an embodiment, at least a portion of the plurality of adsorption sheets 450 may include an absorption member 459 disposed within at least a portion of the plurality of adsorption sheets 450. For example, the absorption member 459 may be disposed inside the first adsorption sheet 451. The absorption member 459 disposed within the first adsorption sheet 451 may be surrounded by the first adsorption sheet 451. For example, the absorption member 459 may be disposed within the internal space 458 inside the first adsorption sheet 451. The absorption member 459 may include micro holes through which air may pass. For example, the absorption member 459 may have a mesh shape. For example, the absorption member 459 may include a porous material (e.g., sponge).

According to an embodiment, at least one air gap 460 may be interposed between the plurality of adsorption sheets 450 having the wound shape. For example, the at least one air gap 460 may be connected to the internal space 458 disposed within each of the plurality of adsorption sheets 450 having the wound shape. As the internal space 458 and the at least one air gap 460 are connected, a contact area between the plurality of adsorption sheets 450 and the air in a resonance space (e.g., a resonance space 440 of FIG. 4) may be increased.

As described above, an electronic device (e.g., an electronic device 200 of FIG. 4) according to an embodiment may provide a structure in which the area in which the plurality of adsorption sheets 450 and the air in the resonance space 440 may contact is expanded through the internal space 458 connected to the at least one air gap 460.

The electronic device may include a resonance space separated from the audio path. The resonance space may be configured to provide a back volume of audio output from a speaker. The electronic device may include an adsorption member which is disposed within the resonance space and to substantially expand the resonance space. As the shape of the resonance space becomes more diverse due to changes in the design inside the electronic device, it may become difficult to dispose the adsorption member within the resonance space. The electronic device may require the adsorption member that may be disposed within a resonance space having various shapes.

An electronic device (e.g., an electronic device 200 of FIG. 4) is provided. According to an embodiment, the electronic device may comprise a housing (e.g., a housing 230 of FIG. 4) including a speaker hole (e.g., a speaker hole 207 of FIG. 4). According to one embodiment, the electronic device may comprise a speaker (e.g., a speaker 410 of FIG. 4) including a first surface (e.g., a first surface 410a of FIG. 4) configured to output audio and a second surface (e.g., a second surface 410b of FIG. 4) opposite to the first surface, and disposed within the housing. According to an embodiment, the electronic device may comprise an audio path (e.g., an audio path 430 of FIG. 4) extending from the first surface toward the speaker hole to output the audio to outside of the housing. According to an embodiment, the electronic device may comprise a resonance space (e.g., a resonance space 440 of FIG. 4) separated from the audio path. According to an embodiment, the electronic device may comprise a first adsorption sheet (e.g., a first adsorption sheet 451 of FIG. 4) disposed within the resonance space to adsorb at least a portion of the air in the resonance space. According to an embodiment, the electronic device may comprise a second adsorption sheet (e.g., a second adsorption sheet 452 of FIG. 4) disposed on the first adsorption sheet in the resonance space to adsorb at least a portion of the air in the resonance space, and having a size different from a size of the first adsorption sheet. According to an embodiment, the electronic device may comprise an air gap (e.g., an air gap 460 of FIG. 4) interposed between the first adsorption sheet and the second adsorption sheet.

The electronic device according to an embodiment may provide a structure in which the quality of audio transmitted to the outside of the housing is improved, since the sizes of the first adsorption sheet and the second adsorption sheet are different from each other so as to have a shape corresponding to the internal shape of the enclosure.

According to an embodiment, the electronic device may further comprise at least one attachment member (e.g., an attachment member 470 of FIG. 4) interposed between the first adsorption sheet and the second adsorption sheet, and attaching the second adsorption sheet to the first adsorption sheet.

The electronic device according to an embodiment may provide a structure in which an air gap is formed between adsorption sheets by spacing the first adsorption sheet and the second adsorption sheet apart through the at least one attachment member.

According to an embodiment, the at least one attachment member may include a first attachment member disposed on a first corner (e.g., a first corner 451e of FIGS. 5A and 5B) of the first adsorption sheet. According to an embodiment, the at least one attachment member may include a second attachment member disposed on a second corner (e.g., a second corner 451f of FIGS. 5A and 5B) of the first adsorption sheet opposite to the first corner. According to an embodiment, the air gap may be located between the first attachment member and the second attachment member.

The electronic device according to an embodiment may provide a structure in which an air gap having a thickness corresponding to thickness of the at least one attachment member is formed between the adsorption sheets, by spacing the first adsorption sheet and the second adsorption sheet apart through the at least one attachment member.

According to an embodiment, the at least one attachment member may include a first attachment member (e.g., a third attachment member 473 of FIG. 6B) extending along a first edge of the first adsorption sheet. According to an embodiment, the at least one attachment member may include a second attachment member (e.g., a fourth attachment member 474 of FIG. 6B) extending along a second edge of the first adsorption sheet connected to the first edge. According to an embodiment, the at least one attachment member may include a third attachment member (e.g., a fifth attachment member 475 of FIG. 6B) extending along a third edge of the first adsorption sheet opposite the first edge connected to the second edge. According to an embodiment, the at least one attachment member may include a fourth attachment member (e.g., a sixth attachment member 476 of FIG. 6B) extending along the fourth edge of the first adsorption sheet opposite to the second edge connecting the third edge and the first edge. According to an embodiment, one end of the fourth attachment member may be connected to the third attachment member, and the other end of the fourth attachment member may be spaced apart from the first attachment member. According to an embodiment, the air gap may be surrounded by the first attachment member, the second attachment member, the third attachment member, and the fourth attachment member.

The electronic device according to an embodiment may provide a structure in which an air gap having a thickness corresponding to thickness of the at least one attachment member is formed between the adsorption sheets, by spacing the first adsorption sheet and the second adsorption sheet apart through the at least one attachment member.

According to an embodiment, the at least one attachment member may include a fifth attachment member (e.g., a seventh attachment member 477 of FIG. 6B) extending along a direction parallel to an extending direction of the first attachment member, and having one end connected to the fourth attachment member. According to an embodiment, the other end of the fifth attachment member may be spaced apart from the fourth attachment member.

The electronic device according to an embodiment may provide a structure in which an air gap having a thickness corresponding to thickness of the at least one attachment member is formed between the adsorption sheets, by spacing the first adsorption sheet and the second adsorption sheet apart through the at least one attachment member.

According to an embodiment, the first adsorption sheet and the second adsorption sheet may include at least one through hole (e.g., at least one through hole 455 of FIGS. 7A and 7B) penetrating each of the first adsorption sheet and the second adsorption sheet. According to an embodiment, the at least one through hole may be connected to the air gap.

The electronic device according to an embodiment may provide a structure in which an area in which the adsorption sheets and air in the resonance space may contact is expanded by at least one through hole penetrating each of the adsorption sheets.

According to an embodiment, the electronic device may comprise at least one attachment member (e.g., an attachment member 470 of FIGS. 7A and 7B) surrounding the air gap and the at least one through hole by being disposed along edges of the first adsorption sheet.

The electronic device according to an embodiment may provide a structure in which an area in which the adsorption sheets and air in the resonance space may contact is expanded by at least one through hole penetrating each of the adsorption sheets.

According to an embodiment, the at least one through hole may include a first through hole (e.g., a first through hole 455a of FIGS. 8A and 8B) penetrating the first adsorption sheet. According to an embodiment, the at least one through hole may include a second through hole (e.g., a second through hole 455b of FIGS. 8A and 8B) penetrating the second adsorption sheet disposed on the first adsorption sheet. According to an embodiment, the second through hole may be disposed outside the first through hole, when the first adsorption sheet is viewed from above.

According to an embodiment, the first adsorption sheet may include a first corner. According to an embodiment, the first adsorption sheet may include a second corner opposite to the first corner. According to an embodiment, the first through hole may be closer to the first corner of the first corner and the second corner, when the first adsorption sheet is viewed from above. According to an embodiment, the second through hole may be closer to the second corner of the first corner and the second corner, when the first adsorption sheet is viewed from above.

According to an embodiment, the electronic device may comprise an accommodating groove (e.g., an accommodating groove 457 of FIGS. 10A and 10B) formed by recessing a portion of the first adsorption sheet inward. According to an embodiment, the electronic device may comprise an attachment member (e.g., an attachment member 470 of FIGS. 10A and 10B) disposed within the accommodating groove and in contact with the second adsorption sheet. According to an embodiment, the air gap may surround a portion of the attachment member protruding from one surface of the first adsorption sheet facing the second adsorption sheet.

The electronic device according to an embodiment may provide a structure in which a contact area between the adsorption sheets and the air in the resonance space may be expanded, since the air gap is formed between the adsorption sheets by the at least one attachment member protruding to the outside of the accommodating groove.

According to an embodiment, the first adsorption sheet may include a stepped portion (e.g., a stepped portion 456 of FIGS. 9A and 9B) protruding from one surface of the first adsorption sheet facing the second adsorption sheet. According to an embodiment, the air gap may be surrounded by the stepped portion.

The electronic device according to an embodiment may provide a structure in which the contact area between the adsorption sheets and the air in the resonance space may be expanded, since at least one air gap is formed between the adsorption sheets by the stepped portion.

According to an embodiment, the electronic device may comprise an attachment member attaching the second adsorption sheet to the first adsorption sheet by being disposed on the stepped portion.

According to an embodiment, a width of the first adsorption sheet may be different from a width of the second adsorption sheet.

According to an embodiment, the electronic device may comprise a first enclosure (e.g., a first enclosure 421 of FIG. 4) disposed within the housing. According to an embodiment, the electronic device may comprise a second enclosure (e.g., a second enclosure 422 of FIG. 4) coupled to the first enclosure. According to an embodiment, the speaker, the audio path, and the resonance space may be disposed within the first enclosure and the second enclosure.

According to an embodiment, the first adsorption sheet may have a wound shape. According to an embodiment, the electronic device may include an absorption member (e.g., an absorption member 459 of FIG. 11) surrounded by the first absorption sheet by being disposed inside the first absorption sheet.

The electronic device according to an embodiment may provide a structure in which the adsorption sheets may be disposed within a resonance space having various shapes, since the adsorption sheets are bent to have a curvature.

An electronic device (e.g., an electronic device 200 of FIG. 4) is provided. According to an embodiment, the electronic device may comprise a housing (e.g., a housing 230 of FIG. 4) including a speaker hole (e.g., a speaker hole 207 of FIG. 4) and providing an exterior of the electronic device. According to an embodiment, the electronic device may comprise a speaker module (e.g., a speaker module 400 of FIG. 4) disposed within the housing. According to an embodiment, the speaker module may include a speaker (e.g., a speaker 410 of FIG. 4) including a first surface (e.g., a first surface 410a of FIG. 4) configured to output audio and a second surface (e.g., a second surface 410b of FIG. 4) opposite to the first surface. According to an embodiment, the speaker module may include a first enclosure (e.g., a first enclosure 421 of FIG. 4) surrounding a portion of the speaker. According to an embodiment, the speaker module may include a second enclosure (e.g., the second enclosure 422 of FIG. 4) coupled to the first enclosure and surrounding another portion of the speaker. According to an embodiment, the speaker module may include an audio path (e.g., an audio path 430 of FIG. 4) extending from the first surface toward outside of the speaker module to output the audio to outside of the housing. According to an embodiment, the speaker module may include a resonance space (e.g., a resonance space 440 of FIG. 4) separated from the audio path, and at least partially located on the second surface. According to an embodiment, the speaker module may include a plurality of adsorption sheets disposed within the resonance space to adsorb at least a portion of the air in the resonance space, and laminated on each other. According to an embodiment, the speaker module may include an air gap (e.g., an air gap 460 of FIG. 4) located between each of the plurality of adsorption sheets. According to an embodiment, a width of a first adsorption sheet (e.g., a first adsorption sheet 451 of FIG. 4) among the plurality of adsorption sheets may be different from a width of a second adsorption sheet (e.g., a second adsorption sheet 452 of FIG. 4) among the plurality of adsorption sheets.

The electronic device according to an embodiment may provide a structure in which the quality of audio transmitted to the outside of the housing is improved, since the sizes of the first adsorption sheet and the second adsorption sheet are different from each other so as to have a shape corresponding to the internal shape of the enclosure.

According to an embodiment, the electronic device may further comprise at least one attachment member (e.g., an attachment member 470 of FIG. 4) interposed between the first adsorption sheet and the second adsorption sheet, and attaching the second adsorption sheet to the first adsorption sheet.

The electronic device according to an embodiment may provide a structure in which an air gap is formed between adsorption sheets by spacing the first adsorption sheet and the second adsorption sheet apart through the at least one attachment member.

According to an embodiment, the first adsorption sheet and the second adsorption sheet may include at least one through hole (e.g., at least one through hole 455 of FIGS. 7A and 7B) penetrating each of the first adsorption sheet and the second adsorption sheet. According to an embodiment, the at least one through hole may be connected to the air gap.

The electronic device according to an embodiment may provide a structure in which an area in which the adsorption sheets and air in the resonance space may contact is expanded by at least one through hole penetrating each of the adsorption sheets.

According to an embodiment, the electronic device may comprise an accommodating groove (e.g., an accommodating groove 457 of FIGS. 10A and 10B) formed by recessing a portion of the first adsorption sheet inward. According to an embodiment, the electronic device may comprise an attachment member (e.g., an attachment member 470 of FIGS. 10A and 10B) disposed within the accommodating groove and in contact with the second adsorption sheet. According to an embodiment, the air gap may surround a portion of the attachment member protruding from one surface of the first adsorption sheet facing the second adsorption sheet.

The electronic device according to an embodiment may provide a structure in which a contact area between the adsorption sheets and the air in the resonance space may be expanded, since the air gap is formed between the adsorption sheets by the at least one attachment member protruding to the outside of the accommodating groove.

According to an embodiment, the first adsorption sheet may include a stepped portion (e.g., a stepped portion 456 of FIGS. 9A and 9B) protruding from one surface of the first adsorption sheet facing the second adsorption sheet. According to an embodiment, the air gap may be surrounded by the stepped portion.

The electronic device according to an embodiment may provide a structure in which the contact area between the adsorption sheets and the air in the resonance space may be expanded, since at least one air gap is formed between the adsorption sheets by the stepped portion.

The electronic device according to various embodiments disclosed in the present document may be various types of devices. The electronic device may include, for example, a portable communication device (e.g., a smartphone), a computer device, a portable multimedia device, a portable medical device, a camera, an electronic device, or a home appliance. The electronic device according to an embodiment of the present document is not limited to the above-described devices.

The various embodiments of the present document and terms used herein are not intended to limit the technical features described in the present document to specific embodiments, and should be understood to include various modifications, equivalents, or substitutes of the embodiment. In relation to the description of the drawings, a similar reference numeral may be used for a similar or related component. The singular form of the noun corresponding to the item may include one or a plurality of items unless explicitly indicated differently in the context involved. In the present document, each of the phrases such as "A or B", "at least one of A and B", "at least one of A or B", "A, B or C", "at least one of A, B and C", and "at least one of A, B or C" may include any one among the items listed together with the corresponding phrase among the phrases, or all possible combinations thereof. Terms such as "1st", "2nd", or "the first", or "the second" may be used simply to distinguish a corresponding component from another corresponding component, and do not limit the corresponding component to other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

The term "module" used in various embodiments of the present document may include units implemented in hardware, software, or firmware, and may be used interchangeably with terms such as logic, logic block, component, or circuit, for example. The module may be an integrally configured component or a minimum unit of the component or a part thereof that performs one or more functions. For example, according to an embodiment, the module may be implemented in the form of an application-specific integrated circuit (ASIC).

Various embodiments of the present document may be implemented as a software (e.g., a program 140) including one or more instructions stored in a storage medium (e.g., an internal memory 136 or an external memory 138) that may be read by a machine (e.g., an electronic device 101). For example, a processor (e.g., processor 120) of the machine (e.g., the electronic device 101) may call at least one instruction among one or more instructions stored from the storage medium and execute it. This makes it possible for the machine to be operated to perform at least one function according to the at least one instruction called. The one or more instructions may include code generated by a compiler or code that may be executed by an interpreter. The machine-readable storage medium may be provided in the form of a non-transitory storage medium. Here, 'non-transitory' only means that the storage medium is a tangible device and does not include a signal (e.g., electromagnetic waves), and this term does not distinguish between a case where data is semi-permanently stored in the storage medium and a case where data is temporarily stored.

According to an embodiment, a method according to various embodiments disclosed in the present document may be included in a computer program product and provided. The computer program product may be traded between a seller and a buyer as a product. The computer program product may be distributed in the form of machine-readable storage medium (e.g., compact disc read only memory (CD-ROM)), or may be distributed (e.g., downloaded or uploaded) online, through an application store (e.g., Play Store^{™}) or directly between two user devices (e.g., smartphones). In case of the online distribution, at least a portion of the computer program product may be at least temporarily stored or temporarily generated in the machine-readable storage medium, such as the memory of a manufacturer's server, an application store's server, or a relay server.

According to various embodiments, each component (e.g., module or program) of the above-described components may include a single or plural entity, and some of the plurality of entities may be separately disposed in other components. According to various embodiments, one or more components among the above-described corresponding components or operations may be omitted, or one or more other components or operations may be added. Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200) comprising:
a housing (230) including a speaker hole (207);
a speaker (410) including a first surface (410a) configured to output audio and a second surface (410b) opposite to the first surface (410a), and disposed within the housing (230);
an audio path (430) extending from the first surface (410a) toward the speaker hole (207) to output the audio to outside of the housing (230);
a resonance space (440) separated from the audio path (430);
a first adsorption sheet (451) disposed within the resonance space (440) to adsorb at least a portion of the air in the resonance space (440);
a second adsorption sheet (452) disposed on the first adsorption sheet (451) to adsorb at least a portion of the air in the resonance space (440), and having a size different from a size of the first adsorption sheet (451); and
an air gap (460) interposed between the first adsorption sheet (451) and the second adsorption sheet (452).

2. The electronic device (101; 200) of claim 1, further comprising at least one attachment member (470) interposed between the first adsorption sheet (451) and the second adsorption sheet (452), and attaching the second adsorption sheet (452) to the first adsorption sheet (451).

3. The electronic device (101; 200) of claim 2,
wherein the at least one attachment member (470) includes:
a first attachment member (471) disposed on a first corner (451e) of the first adsorption sheet (461), and
a second attachment member (472) disposed on a second corner (451f) of the first adsorption sheet (451) opposite to the first corner (451e), and
wherein the air gap (460) is located between the first attachment member (471) and the second attachment member (472).

4. The electronic device (101; 200) of any one of claim 2 or 3,
wherein the at least one attachment member (470) includes:
a first attachment member (473) extending along a first edge of the first adsorption sheet (451),
a second attachment member (474) extending along a second edge of the first adsorption sheet (451) connected to the first edge,
a third attachment member (475) extending along a third edge of the first adsorption sheet (451) opposite the first edge connected to the second edge, and
a fourth attachment member (476) extending along the fourth edge of the first adsorption sheet (451) opposite to the second edge connecting the third edge and the first edge,
wherein one end of the fourth attachment member (476) is connected to the third attachment member (475),
wherein the other end of the fourth attachment member (476) is spaced apart from the first attachment member (473), and
wherein the air gap (460) is surrounded by the first attachment member (473), the second attachment member (474), the third attachment member (475), and the fourth attachment member (476).

5. The electronic device (101; 200) of claim 4,
wherein the at least one attachment member (470) further includes a fifth attachment member (477) extending along a direction parallel to an extending direction of the first attachment member (473), and having one end connected to the fourth attachment member (476), and
wherein the other end of the fifth attachment member (477) is spaced apart from the fourth attachment member (476).

6. The electronic device (101; 200) of any one of claims 1 to 5,
wherein the first adsorption sheet (451) and the second adsorption sheet (462) further include at least one through hole (455) penetrating each of the first adsorption sheet (451) and the second adsorption sheet (462), and
wherein the at least one through hole (455) is connected to the air gap (460).

7. The electronic device (101; 200) of claim 6, further comprising:
at least one attachment member (470) surrounding the air gap (460) and the at least one through hole (455) by being disposed along edges of the first adsorption sheet (451).

8. The electronic device (101; 200) of any one of claim 6 or 7,
wherein the at least one through hole (455) includes a first through hole (455a) penetrating the first adsorption sheet (451), and a second through hole (455b) penetrating the second adsorption sheet (452) disposed on the first adsorption sheet (451), and
wherein the second through hole (455b) is disposed outside the first through hole (455a), when the first adsorption sheet (451) is viewed from above.

9. The electronic device (101; 200) of claim 8,
wherein the first adsorption sheet (451) includes a first corner (451e) and a second corner (451f) opposite to the first corner (451e),
wherein the first through hole (455a) is closer to the first corner (451e) of the first corner (451e) and the second corner (451f), when the first adsorption sheet (451) is viewed from above, and
wherein the second through hole (455b) is closer to the second corner (451f) of the first corner (451e) and the second corner (451f), when the first adsorption sheet (451) is viewed from above.

10. The electronic device (101; 200) of any one of claims 1 to 9, further comprising:
an accommodating groove (457) formed by recessing a portion of the first adsorption sheet (451) inward; and
an attachment member (470) disposed within the accommodating groove (457) and in contact with the second adsorption sheet (452), and
wherein the air gap (460) surrounds a portion of the attachment member (470) protruding from one surface of the first adsorption sheet (451) facing the second adsorption sheet (452).

11. The electronic device (101; 200) of any one of claims 1 to 10,
wherein the first adsorption sheet (451) includes a stepped portion (456) protruding from one surface of the first adsorption sheet (451) facing the second adsorption sheet (452), and
wherein the air gap (460) is surrounded by the stepped portion (456).

12. The electronic device (101; 200) of claim 11, further comprising an attachment member (470) attaching the second adsorption sheet (452) to the first adsorption sheet (451) by being disposed on the stepped portion (456).

13. The electronic device (101; 200) of any one of claims 1 to 12,
wherein a width of the first adsorption sheet (451) is different from a width of the second adsorption sheet (452).

14. The electronic device (101; 200) of any one of claims 1 to 13, further comprising:
a first enclosure (421) disposed within the housing (230); and
a second enclosure (422) coupled to the first enclosure (421),
wherein the speaker (410), the audio path (430), and the resonance space (440) is disposed within the first enclosure (421) and the second enclosure (422).

15. The electronic device (101; 200) of any one of claims 1 to 14,
wherein the first adsorption sheet (451) has a wound shape, and further includes an absorption member (459) surrounded by the first adsorption sheet (451) by being disposed inside the first adsorption sheet (451).
